Europäisches Patentamt

European Patent Office

Office européen des brevets

(19)

(11) **EP 0 797 218 B1**

(12) **EUROPEAN PATENT SPECIFICATION**

(45) Date of publication and mention
of the grant of the patent:
**05.06.2002   Bulletin 2002/23**

(51) Int Cl.[7]: **H01B 1/12**, C08G 61/12

(21) Application number: **97301956.5**

(22) Date of filing: **21.03.1997**

(54) **Electrically conductive polymers**

Elektrisch leitende Polymere

Polymères électroconducteurs

(84) Designated Contracting States:
**DE FR GB**

(30) Priority: **22.03.1996   US 620618**
**22.03.1996   US 620631**
**22.03.1996   US 620619**

(43) Date of publication of application:
**24.09.1997   Bulletin 1997/39**

(73) Proprietor: **International Business Machines
Corporation
Armonk, N.Y. 10504 (US)**

(72) Inventors:
• **Angelopoulos, Marie
Cortlandt Manor, New York 10566 (US)**
• **Yun-Hsin, Liao
Tarrytown, New York 10591 (US)**
• **Saraf, Ravi F.
Briarcliff Manor, New York 10510 (US)**

(74) Representative: **Davies, Simon Robert
I B M
UK Intellectual Property Department
Hursley Park
Winchester, Hampshire SO21 2JN (GB)**

(56) References cited:
**EP-A- 0 721 194**

• **ANGELOPOULOS M ET AL: "Effect of selected
processing parameters on solution properties
and morphology of polyaniline and impact on
conductivity" INTERNATIONAL CONFERENCE
ON SCIENCE AND TECHNOLOGY OF
SYNTHETIC METALS (ICSM '96), SNOWBIRD,
UT, USA, 28 JULY-2 AUG. 1996, vol. 84, no. 1-3,
ISSN 0379-6779, SYNTHETIC METALS, 1 JAN.
1997, ELSEVIER, SWITZERLAND, pages 35-39,
XP002038850**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention is directed to polycrystalline electrically conductive polymer precursors and polycrystalline conducting polymers having adjustable morphology and properties, and methods for making such precursors and polymers.

Electrically conductive organic polymers emerged in the 1970's as a new class of electronic materials. These materials have the potential of combining the electronic and magnetic properties of metals with the light weight, processing advantages, and physical and mechanical properties characteristic of conventional organic polymers. Examples of electrically conducting polymers are polyparaphenylene vinylenes, polyparaphenylenes, polyanilines, polythiophenes, polyazines, polyfuranes, polythianaphthenes polypyrroles, polyselenophenes, poly-p-phenylene sulfides, polyacetylenes formed from soluble precursors, combinations thereof and blends thereof with other polymers and copolymers of the monomers thereof.

These polymers are conjugated systems which are made electrically conducting by doping. The doping reaction can involve an oxidation, a reduction, a protonation, an alkylation, etc. The non-doped or non-conducting form of the polymer is referred to herein as the precursor to the electrically conducting polymer. The doped or conducting form of the polymer is referred to herein as the conducting polymer.

Conducting polymers have potential for a large number of applications in such areas such as electrostatic charge/discharge (ESC/ESD) protection, electromagnetic interference (EMI) shielding, resists, electroplating, corrosion protection of metals, and ultimately metal replacements, i.e. wiring, plastic microcircuits, conducting pastes for various interconnection technologies (solder alternative), etc. Many of the above applications especially those requiring high current capacity have not yet been realized because the conductivity of the processible conducting polymers is not yet adequate for such applications.

To date, polyacetylene exhibits the highest conductivity of all the conducting polymers. The reason for this is that polyacetylene can be synthesized in a highly crystalline form (crystallinity as high as 90% has been achieved) (as reported in Macromolecules, 25, 4106, 1992). This highly crystalline polyacetylene has a conductivity on the order of $10^5$ S/cm. Although this conductivity is comparable to that of copper, polyacetylene is not technologically applicable because it is a non-soluble, non-processible, and environmentally unstable polymer.

The polyaniline class of conducting polymers has been shown to be probably the most suited of such materials for commercial applications. Great strides have been made in making the material quite processable. It is environmentally stable and allows chemical flexibility which in turn allows tailoring of its properties. Polyaniline coatings have been developed and commercialized for numerous applications. Devices and batteries have also been constructed with this material. However, the conductivity of this class of polymers is generally on the low end of the metallic regime. The conductivity is on the order of $10^0$ S/cm. Some of the other soluble conducting polymers such as the polythiophenes, poly-para-phenylenevinylenes exhibit conductivity on the order of $10^2$ S/cm. It is therefore desirable to increase the conductivity of the soluble/processible conducting polymers, in particular the polyaniline materials.

EP-A 721194 discloses electrically conducting polymers such as polyanilines having enhanced conductivity through the addition of a deaggregating agent such as a surfactant, salt, or certain acidic additives. The reduction of polymer aggregates is thought to improve doping uniformity, thereby leading to enhanced conductivity.

The conductivity ($\sigma$) is dependent on the number of carriers (n) set by the doping level, the charge on the carriers (q) and on the interchain and intrachain mobility ($\mu$) of the carriers.

$$\sigma = n\ q\ \mu$$

Generally, n (the number of carriers) in these systems is maximized and thus, the conductivity is dependent on the mobility of the carriers. To achieve higher conductivity, the mobility in these systems needs to be increased. The mobility, in turn, depends on the morphology of the polymer. The intrachain mobility depends on the degree of conjugation along the chain, presence of defects, and on the chain conformation. The interchain mobility depends on the interchain interactions, the interchain distance, the degree of crystallinity, etc. Increasing the crystallinity results in increased conductivity as examplified by polyacetylene. To date, it has proven quite difficult to attain polyaniline in a highly crystalline state. Some crystallinity has been achieved by stretch orientation or mechanical deformation (A.G. MacDiarmid et al in Synth. Met. 55-57, 753). In these stretch-oriented systems, conductivity enhancements have been observed. The conductivity enhancement was generally that measured parallel to the stretch direction. Therefore, the conductivity in these systems is anisotropic. It is desirable to achieve a method of controlling and tuning the morphology of polyaniline. It is desirable to achieve a method of controlling and tuning the degree of crystallinity and the degree of amorphous regions in polyaniline, which in turn provides a method of tuning the physical, mechanical, and electrical properties of polyaniline. It is further desirable to achieve highly crystalline and crystalline polyaniline and to achieve this in a simple and useful manner in order to increase the mobility of the carriers and, therefore, the conductivity of the polymer. It is also further desirable to achieve isotropic conductivity, that is conductivity not dependent on direction as with stretch-oriented polyanilines.

Accordingly, the present invention provides a structure comprising:

a polycrystalline material comprising crystallites of polymers with intersticial regions therebetween;
said polymers being selected from the group consisting of a precursor to an electrically conductive polymer and an electrically conductive polymer;
said intersticial regions between said crystallites comprising amorphous material including an additive;

wherein said additive is a plasticizer selected from the group consisting of:

Adipic acid derivatives; Sebacic acid derivatives; Azelaic acid derivatives; Stearic acid derivatives; Benzoic acid derivatives; Succinic acid derivatives; Citric acid derivatives; Dimer acid derivatives; Terpentines; Epoxy derivatives; Terpentine derivatives; Fumaric acid derivatives; Siloxanes; Polysiloxanes; Isobutyrate derivatives; Ethylene glycols; Isophthalic acid derivatives; Lauric acid derivatives; Polyesters; Linoleic acid derivatives; Sucrose derivatives; Maleic acid derivatives; Tartaric acid derivatives; Mellitates; Terephthalic acid derivatives; Myristic acid derivatives; Trimellitic acid derivatives; Oleic acid derivatives; Palmitic acid derivatives; Glycolates; Paraffin derivatives; Phosphoric acid derivatives; Phosphonic acid derivatives; Phthalic acid derivatives; Polysilanes; and Ricinoleic acid derivatives.

In a preferred embodiment said structure is electrically conductive and has an isotropic electrical conductivity. Such a structure finds application by way of example as a wire, a solder, an electromagnetic interference shield, or a semiconductor device, or a corrosion protection coating.

Said polymer is preferably selected from the group consisting of substituted and unsubstituted polyparaphenylene vinylenes, polyparaphenylenes, polyanilines, polythiophenes, polyazines, polyfuranes, polypyrroles, polyselenophenes, poly-p-phenylene sulfides, polyacetylenes formed from soluble precursors, combinations thereof and blends thereof with other polymers and copolymers of the monomers thereof.

Typically said additive interacts with said polymer by interactions selected from the group consisting of hydrogen bonding, dipolar interactions, electrostatic interactions, Vander Waal interactions and polar groups on said additive.

Further in the preferred embodiment, said structure has crystallinity greater than about 25%, said polymer is an electrically conductive polymer and said polycrystalline material has a conductivity which is isotropic. Preferably said crystallites have a size greater than about 80 Angstroms, and the amorphous material in the intersticial regions contains crosslinks and is deaggregated.

A preferred embodiment of the invention provides a polycrystalline material comprising crystallites of polyaniline with intersticial regions therebetween; said polyaniline being selected from the group consisting of a precursor to an electrically conductive polyaniline and an electrically conductive polyaniline; said intersticial regions comprising an amorphous material selected from the group consisting of polyaniline; said amorphous material including an additive in an amount from about 0.001% to about 90% by weight; said additive being selected from the group consisting of poly-co-dimethylaminopropyl siloxane, poly (ethylene glycol) tetrahydro furfuryl ether and epoxidized soy bean oil.

In the preferred embodiment, said structure is stretch oriented and/or thermally annealed, and said additive is selected from the group consisting of monomer, oligomeric and polymeric plasticizers.

In addition, the invention provides methods for making the above structures. In particular, the invention provides a method comprising the steps of:

forming an admixture of a solvent, an additive and a polymer selected from the group consisting of a precursor to an electrically conductive polymer and an electrically conductive polymer; and
removing or partly removing said solvent;

wherein said additive is a plasticizer selected from the group consisting of:

Adipic acid derivatives; Sebacic acid derivatives; Azelaic acid derivatives; Stearic acid derivatives; Benzoic acid derivatives; Succinic acid derivatives; Citric acid derivatives; Dimer acid derivatives; Terpentines; Epoxy derivatives; Terpentine derivatives; Fumaric acid derivatives; Siloxanes; Polysiloxanes; Isobutyrate derivatives; Ethylene glycols; Isophthalic acid derivatives; Lauric acid derivatives; Polyesters; Linoleic acid derivatives; Sucrose derivatives; Maleic acid derivatives; Tartaric acid derivatives; Mellitates; Terephthalic acid derivatives; Myristic acid derivatives; Trimellitic acid derivatives; Oleic acid derivatives; Palmitic acid derivatives; Glycolates; Paraffin derivatives; Phosphoric acid derivatives; Phosphonic acid derivatives; Phthalic acid derivatives; Polysilanes; and Ricinoleic acid derivatives.

Preferably said admixture is electrically conductive and has an isotropic electrical conductivity; said solvent when removed or partly removed forms a film which is further stretch oriented; and said solvent .is extracted from said admixture by a technique selected from the group consisting of solvent extraction and evaporation.

One preferred approach involves: forming an admixture of polyaniline base, N-methyl pyrrolidinone and a plasticizer; said plasticizer content being from about 0.001% to about 90% by weight of said admixture; said plasticizer being selected from the group consisting of poly-co-dimethyl aminopropyl siloxane, polyglycol diacid, 3,6,9-trioxeundecaedioic acid and poly (ethylene glycol) tetrahydro furfuryl ether, and epoxidized soy bean oil.

It is preferred that said additive is first added to a solvent and thereafter an electrically conducting polyaniline is added which becomes neutralized upon addition to said admixture; that said admixture contains a polyaniline monomer, said additive and an oxidant; and that the method further includes adding a dopant.

In the preferred embodiment, said additive contains substituents which facilitate the miscibility of said polymer and said additive includes a plasticization or de-plasticization effect.

An advantage of the present invention is that the amount of said additive is adjustable, the amount being controllable to modify physical properties of said structure, such as glass transition temperature, compliance, thermal coefficient of expansion, modulus, yield and tensile strength, hardness, density.

A preferred embodiment of the present invention provides a polyaniline material having at least one crystal having an interchain registration greater than that of a stretch oriented film, preferably with a metallic island size greater than about 200 Angstroms.

Thus as described above, a polycrystalline material containing crystallites of an electrically conducting polymer precursor and/or electrically conducting polymer is provided having an adjustable morphology, in which the degree of amorphous and crystalline regions is adjustable, and having adjustable physical, mechanical, and electrical properties. An additive is used to induce an enhanced degree of crystallinity, and to provide a non-stretch oriented polycrystalline film of an electrically conductive polymer (or precursor thereof) with such an enhanced degree of crystallinity. The preferred embodiment provides a ploycrystalline material providing a highly crystalline electrically conducting polymer precursor and a highly crystalline electrically conducting polymer.

The preferred embodiment provides electrically conducting polycrystalline material that exhibits enhanced carrier mobility and enhanced conductivity, more especially, enhanced isotropic conductivity.

As described above, both an plasticization and an antiplasticization effect can be provided in a polycrystalline electrically conducting polymer precursor and/or an electrically conducting polymer, leading to a polycrystalline material of an electrically conducting polymer precursor and/or electrically conducting polymer having an increased glass transition temperature, and alternatively to an electrically conducting polymer precursor and electrically conducting polymer having a decreased glass transition temperature, with corresponding enhanced or decrease mechanical properties as appropriate.

Thus a polycrystalline material is provided comprising crystallites of a precursor to an electrically conductive polymer and/or an electrically conductive polymer. The intersticial regions between the crystallites contain amorphous material. The amorphous regions of the material contain an additive. Such electrically conducting polymer precursors and conducting polymers have adjustable morphology and in turn adjustable physical, mechanical, and electrical properties. The 3-dimensional order or crystallinity of the conducting polymer precursors and/or conducting polymers can be controlled and enhanced, plus the electrical conductivity of conducting polymers may be enhanced.

The precursor or electrically conductive polymer which has an enhanced degree of crystallinity may be fabricated without being stretch oriented. Thus a method is provided for forming an admixture of a solvent, an additive and a polymer selected from the group consisting of a precursor to an electrically conductive polymer and an electrically conductive polymer wherein the solvent is removed or partially removed and the additive provides local mobility to the polymer to allow the polymer chains to tightly associate with one another to achieve a high crystalline state.

According to one particular aspect, a method is provided of forming an admixture of a solvent, an additive and a polymer selected from the group consisting of a precursor to an electrically conductive polymer and an electrically conductive polymer, wherein the solvent is removed or partly removed, and the additive provides a plasticization effect. It is also possible to achieve an anti-plasticization effect by the same approach.

Similarly, a structure may be formed having an admixture of an additive and a polymer selected from the group consisting of a precursor to an electrically conductive polymer and an electrically conductive polymer, wherein the additive provides a plasticization effect or antiplasticization effect as desired. Such a structure has an admixture of an additive and a polymer selected from the group consisting of a precursor to an electrically conductive polymer and an electrically conductive polymer wherein the additive provides local mobility to the polymer to allow the polymer chains to closely associate with one another to achieve a highly crystalline state.

To recap therefore, in the preferred embodiment, polycrystalline materials contain crystallites of precursors to electrically conductive polymers or electrically conductive polymers which have an adjustable high degree of crystallinity. The intersticial regions between the crystallites contain amorphous material containing precursors to electrically conductive polymers and/or electrically conductive polymers. The degree of crystallinity is achieved by preparing the materials under conditions which provide a high degree of mobility to the polymer molecules permitting them to associate with one another to form a crystalline state. This is preferably achieved by including additives, such as plasticizers and diluents, to the solution from which the polycrystalline material is formed. The morphology of the polycrystalline material is adjustable to modify the properties of the material such as the degree of crystallinity, crystal grain size, glass transition temperature, thermal coefficient of expansion and degree of electrical conductivity. High levels of electrical conductivity are achieved in the electrically conductive polycrystalline materials without stretch orienting the material. The enhanced electrical conductivity is isotropic as compared to a stretch oriented film which has an isotropic electrical conductivity. Additives are added to a solution containing a solvent and the precursor or electrically conductive polymer. The additives are preferably plasticizer or diluents. As the solvent is removed the material dries and contains a higher degree of crystallinity than in the absence of the additive.

Preferred embodiments of the invention will now be described in detail by way of example only with reference to the following drawings:

Fig. 1 is a general formula for polyaniline in the non-doped or precursor form;
Fig. 2 is a general formula for a doped conducting polyaniline
Fig. 3 is a general formula for the polysemiquinone radical cation form of doped conducting polyaniline;
Fig. 4 is a Gel Permeation Chromatograph (GPC) of polyaniline base in NMP (.1 %). GPC shows a trimodal distribution - a very high molecular weight fraction (approx. 12%) and a major peak having lower molecular weight;
Fig. 5 illustrates three curves: Curve 5(a) is a Wide Angle X-Ray Scattering (WAXS) spectrum for a polyaniline base film processed from NMP. The polymer film is essentially amorphous; Curve 5(b) is a Wide Angle X-Ray Scattering spectrum for a polyaniline base film that has been stretch-oriented (l/lo=3.7). This film was derived from a gel. Curve 5(c) is a Wide Angle X-Ray Scattering spectrum for a polyaniline base film containing 10% of poly-co-dimethyl propylamine siloxane. This film is highly crystalline;
Fig. 6 is a Schematic diagram of a polycrystalline material having crystalline regions (outlined in dotted rectangles) with intersticial amorphous regions;
Fig.7 is a Dynamic Mechanical Thermal Analysis (DMTA) plot for polyaniline base film cast from NMP. (First Thermal Scan; under Nitrogen);
Fig. 8 is a DMTA plot which represents the second thermal scan for a polyaniline base film cast from NMP; This same film was previously scanned as shown in Fig.7. The film contains no residual solvent;
Fig. 9 is a DMTA plot for polyaniline base film cast from NMP and containing 5% poly-co-dimethyl aminopropyl siloxane (5% N content). First Thermal Scan;
Fig. 10 is a DMTA plot for polyaniline base film cast from NMP and containing 5% poly-co-dimethyl aminopropyl siloxane (5% N content). Second Thermal Scan (this same film was previously scanned as shown in Fig. 9). The film contains no residual solvent; and
Fig. 11 is a GPC for a polyaniline base solution in NMP containing 5% poly-co-dimethyl aminopropyl siloxane by weight to polyaniline. The polyaniline was .1% in NMP.

In the preferred embodiment an admixture of an electrically conducting polymer precursor or an electrically conducting polymer and an additive is formed, whereby the additive provides local mobility to the molecules so as to allow the conducting polymer precursor or conducting polymer chains to associate with one another and achieve a highly crystalline state. An example of such an additive is a plasticizer. A plasticizer is a substance which when added to a polymer, solvates the polymer and increases its flexibility, deformability, generally decreases the glass transition temperature Tg, and generally reduces the tensile modulus. In certain cases, the addition of a plasticizer may induce antiplasticization, that is an increase in the modulus or stiffness of the polymer, an increase in Tg. Herein the additives can provide a plasticization effect, an antiplasticization effect or both effects.

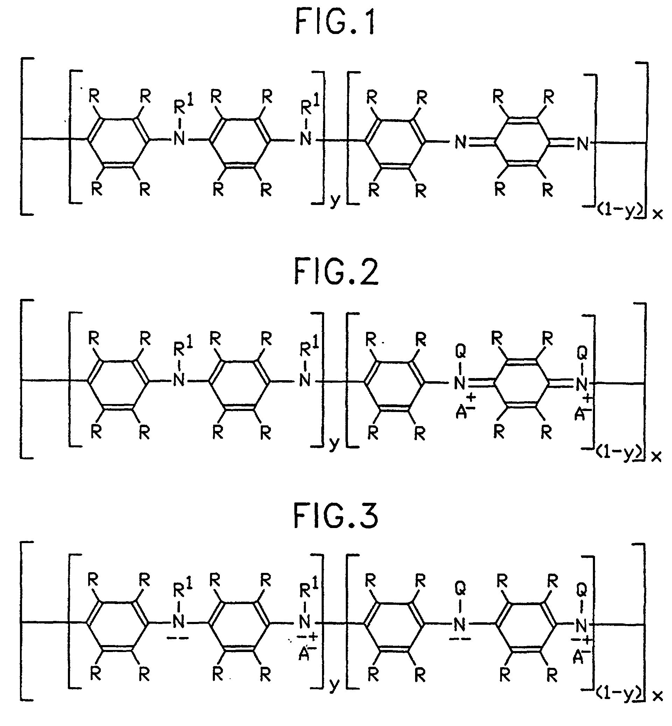

Examples of polymers which can be used to practice the present invention are of substituted and unsubstituted homopolymers and copolymers of aniline, thiophene, pyrrole, p-phenylene sulfide, azines, selenophenes, furans, thianaphthenes, phenylene vinylene, etc. and the substituted and unsubstituted polymers, polyparaphenylenes, polyparaphenylevevinylenes, polyanilines, polyazines, polythiophenes, poly-p-phenylene sulfides, polyfuranes, polypyrroles, polythianaphthenes, polyselenophenes, polyacetylenes formed from soluble precursors and combinations thereof and copolymers of monomers thereof. The general formula for these polymers can be found in U.S. Patent 5,198,153 to Angelopoulos et al. The preferred embodiment provides a substituted or unsubstituted polyaniline or copolymers of polyaniline having general formula shown in Fig. 1 wherein each R can be H or any organic or inorganic radical; each R can be the same or different; wherein each $R^1$ can be H or any organic or inorganic radical, each $R^1$ can be the same or different; $x \geq 1$; preferably $x \geq 2$ and y has a value from 0 to 1. Examples of organic radicals are alkyl or aryl radicals. Examples of inorganic radicals are Si and Ge. This list is exemplary only and not limiting. The most preferred embodiment is the emeraldine base form of the polyaniline wherein y has a value of approximately 0.5. The base form is the non-doped form of the polymer. The non-doped form of polyaniline and the non-doped form of the other conducting polymers is herein referred to as the electrically conducting polymer precursor.

In Fig. 2, polyaniline is shown doped with a dopant. In this form, the polymer is in the conducting form. If the polyaniline base is exposed to cationic species QA, the nitrogen atoms of the imine (electron rich) part of the polymer become substituted with the Q+ cation to form an emeraldine salt as shown in Fig. 2. Q+ can be selected from H+ and organic or inorganic cations, for example, an alkyl group or a metal.

QA can be a protic acid where Q is hydrogen. When a protic acid, HA, is used to dope the polyaniline, the nitrogen atoms of the imine part of the polyaniline are protonated. The emeraldine base form is greatly stabilized by resonance effects. The charges distribute through the nitrogen atoms and aromatic rings making the imine and amine nitrogens indistinguishable. The actual structure of the doped form is a delocalized polysemiquinone radical cation as shown in Fig. 3.

The emeraldine base form of polyaniline is soluble in various organic solvents and in various aqueous acid solutions. Examples or organic solvents are dimethylsulfoxide (DMSO), dimethylformamide (DMF) and N-methylpyrrolidinone (NMP), dimethylene propylene urea, tetramethyl urea, etc. This list is exemplary only and not limiting. Examples of aqueous acid solutions are 80% acetic acid and 60-88% formic acid. This list is exemplary only and not limiting.

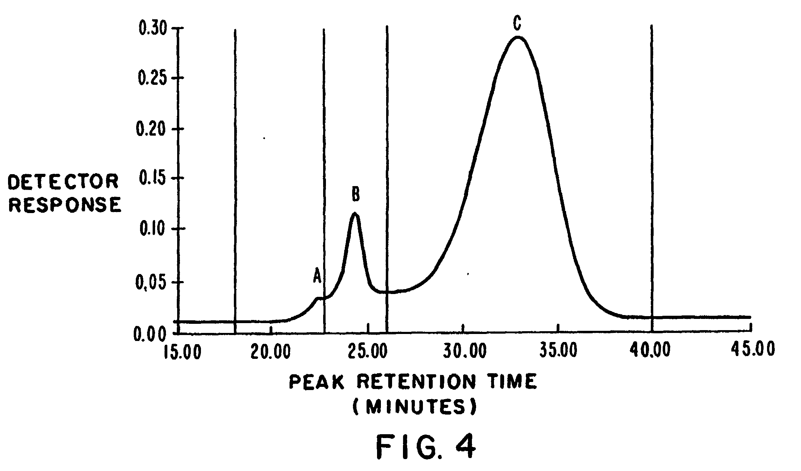

Polyaniline base is generally processed by dissolving the polymer in NMP. These solutions exhibit a bimodal or trimodal distribution in Gel Permeation Chromatography (GPC) as a result of aggregation induced by internal hydrogen bonding between chains as previously described in U.S. patent application serial no. 08/370,128, filed on January 9, 1995, (corresponding to European application 95120081.5). The GPC curve for typical polyaniline base in NMP is shown in Figure 4.

Polymers in general can be amorphous, crystalline, or partly crystalline. In the latter case, the polymer consists of crystalline phases and amorphous phases. The morphology of a polymer is very important in determining the polymer's physical, mechanical, and electronic properties.

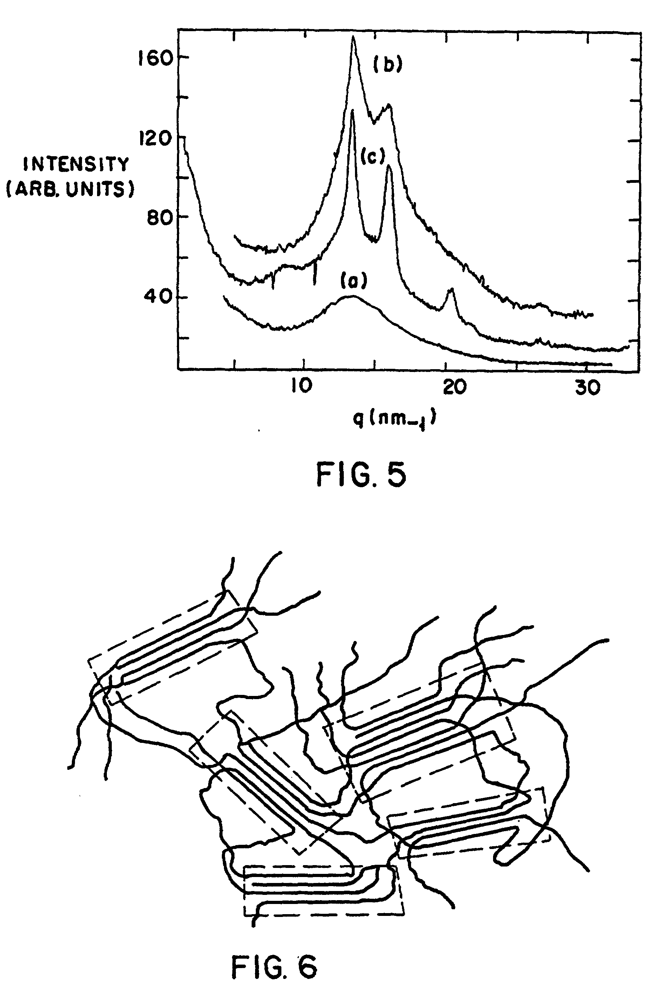

Polyaniline base films processed from NMP either by spin-coating or by solution casting techniques are amorphous as can be seen in Figure 5a which depicts the wide Angle X-Ray Scattering (WAXS) spectrum for this material. Amorphous diffuse scattering is observed. Some crystallinity is induced in these films by post processing mechanical deformation especially if these films are derived from gels as described by A.G. MacDiarmid et al in Synth. Met. 55-57, 753 (1993). WAXS of a stretch oriented film having been stretched (l/lo=3.7X) derived from a gel is shown in Figure 5b. Some crystallinity has been induced as compared to the non-stretch oriented films as evidenced by the defined scattering peaks.

Doping the amorphous polyaniline base films (those having the structure shown in Figure 5a) with aqueous hydrochloric acid results in isotropic conductivity of 1 S/cm. Such films are not crystalline. Similar doping of stretch oriented films results in anisotropic conductivity where conductivity on the order of $10^2$ S/cm is measured parallel to the stretch direction whereas conductivity on the order of $10^0$ S/cm is measured perpendicular to the stretch direction. It should also be noted that some level of crystallinity is lost during the doping process in these films.

In accordance with the teachings of the present invention, the interchain (polymer chain) registration is increased as compared to a stretch oriented film.

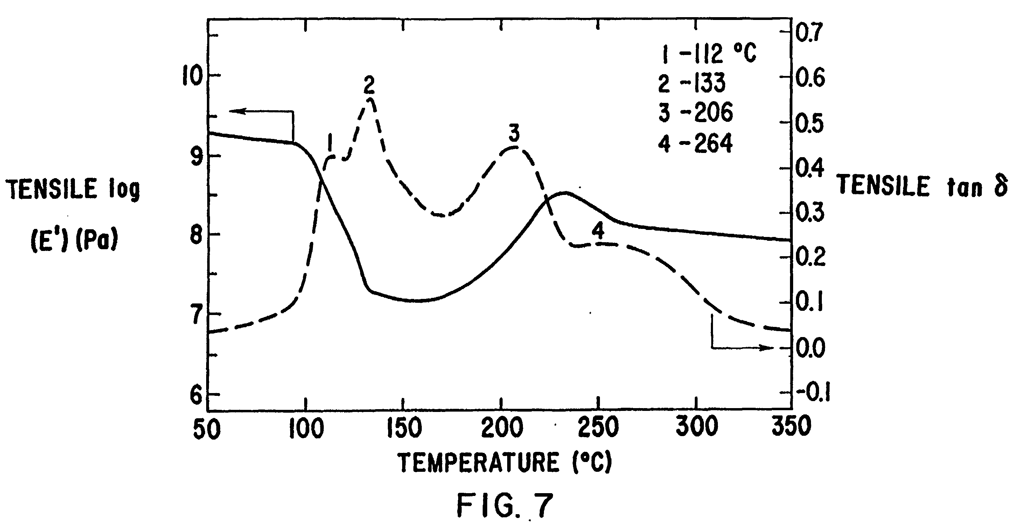

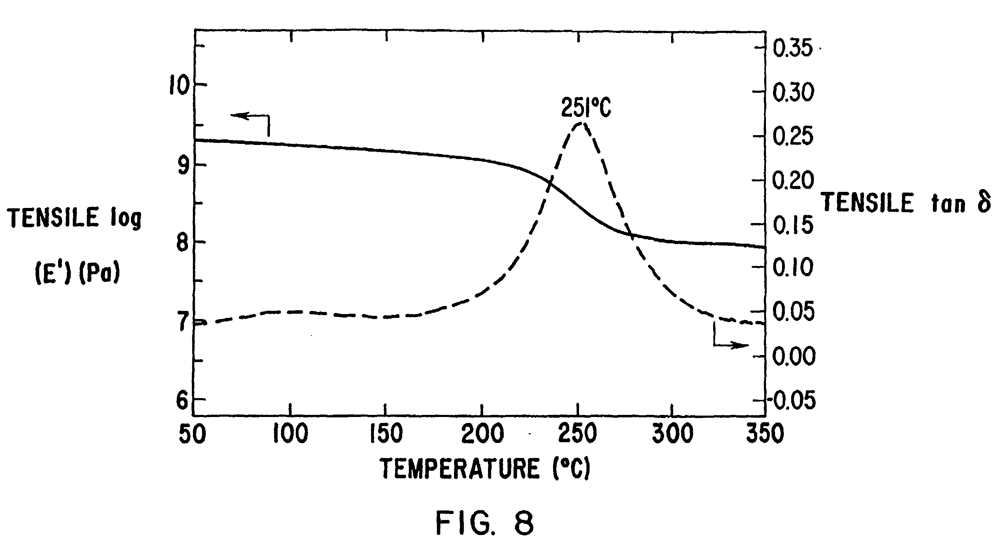

Figures 7 and 8 show the dynamic mechanical thermal analysis (DMTA) spectrum for a polyaniline base film processed from NMP alone. Figure 7 is the first scan where a Tg of approximately 118°C is observed as a result of the residual NMP which is present in the film. Figure 8 is the second thermal scan of the same film. This film has no residual solvent and a Tg of ≈251°C is measured for the polyaniline base polymer.

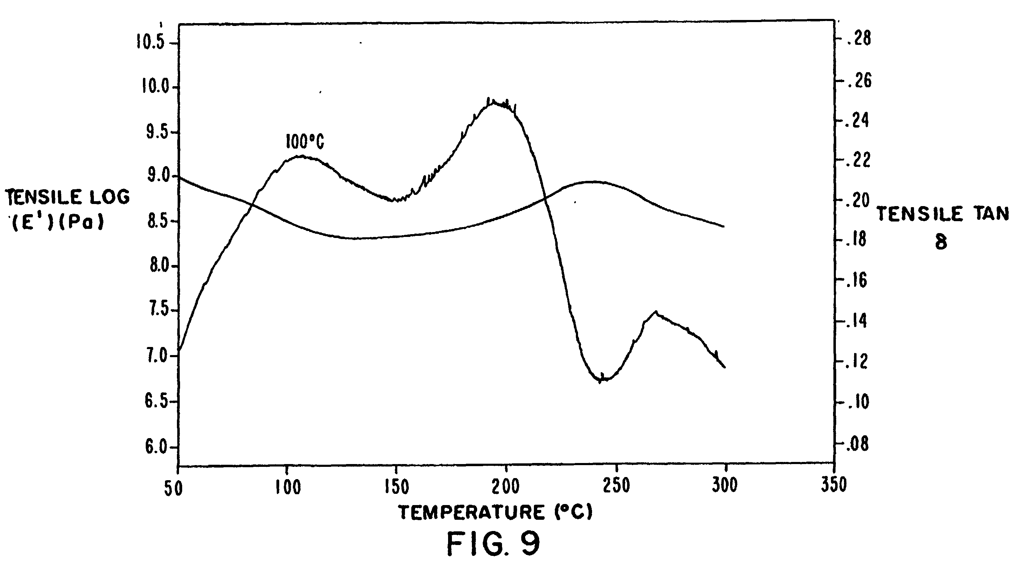

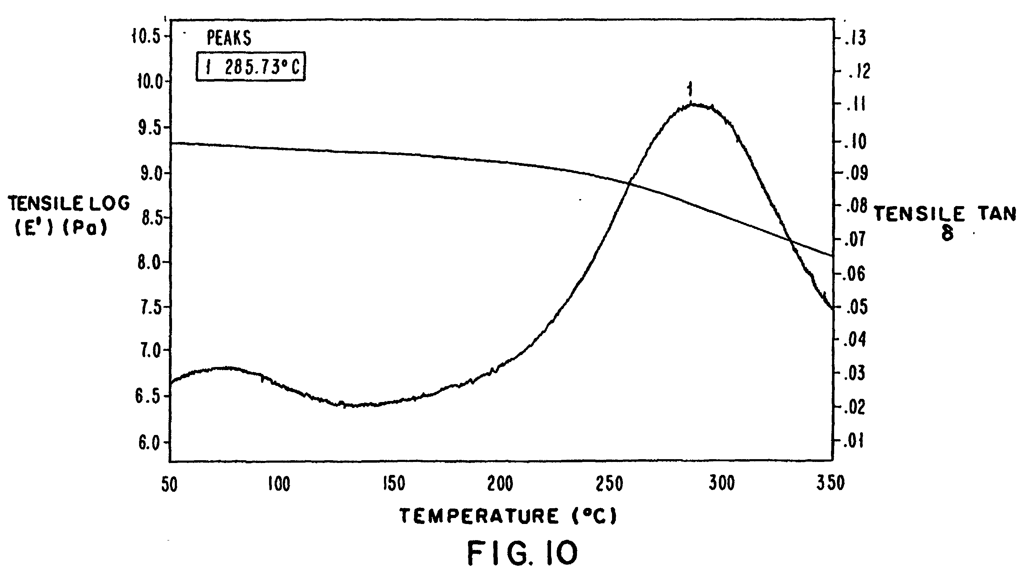

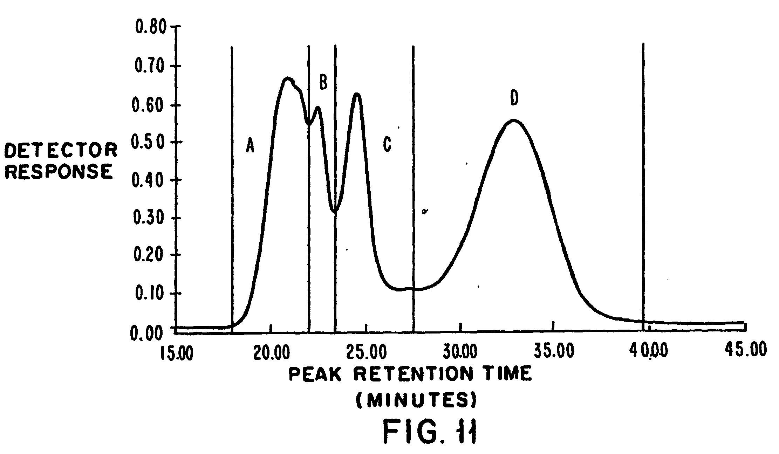

When an additive such as a plasticizer, such as a poly-co-dimethyl propylamine siloxane, is added to the polyaniline base, completely different properties and morphology are observed. The siloxane has a polar amine group which facilitates the miscibility of the polyaniline base and the plasticizer. The DMTA of a polyaniline base film cast from NMP and containing 5% by weight to polyaniline of the poly-co-dimethyl propyl amine siloxane exhibits a lower Tg on the first thermal scan as compared to polyaniline base processed from NMP alone (Figure 9) as a result of plasticization induced by the siloxane. However, on the second thermal scan of this film (Figure 10), the polymer exhibits an increase in Tg as compared to polyaniline processed from NMP. When the polysiloxane is added to a solution of polyaniline base, the siloxane due to the polar amine group can interact with the polymer chains and disrupt some of the polyaniline interactions with itself or some of the aggregation. Thus, the polysiloxane first induces some deaggregation. However, the polysiloxane has multiple amine sites and thus, it can itself hydrogen bond with multiple polyaniline base chains and thus, the polysiloxane facilitates the formation of a cross-linked network. This cross-linked network accounts for the increased Tg observed in the DMTA. Tg is characteristic of the amorphous regions of a polymer and in this case the amorphous regions consist of a cross-linked polyaniline/polysiloxane network. Thus, the polysiloxane is inducing an antiplasticization effect in polyaniline base as the Tg is increased. Generally, plasticizers reduce Tg. GPC data (Figure 11) is consistent with this model. The addition of the poly-amino containing siloxane to a polyaniline base solution in NMP results in a significant increase in the high molecular weight fractions depicting the cross-linked network which forms between polyaniline and the plasticizer.

In addition to the cross-linked network the siloxane induces in the amorphous regions, concomittantly it also is found to induce significant levels of crystallinity in polyaniline base as a result of the local mobility that it provides. Figure 5c shows the WAXS for a polyaniline base film processed from NMP containing 10% of the poly amino containing siloxane. As can be seen highly crystalline polyaniline has been attained, which are much higher levels of crystallinity as compared to Figure 5b for the stretch oriented films.

Thus polyaniline by the addition of the siloxane forms a structure depicted in Figure 6 where crystalline regions of highly associated polyaniline chains (outlined by a rectangle) are formed with intersticial amorphous regions. In most cases, the additive resides in the amorphous intersticial sites. The degree of crystallinity (number of crystalline sites) and the size of the crystalline domains as well as the degree of amorphous regions and the nature of the amorphous region (aggregated, i.e. cross-linked or not) can be tuned by the type and amount of additive. In turn, by controlling the above, the properties of the material can also be controlled.

With the poly -co-dimethyl aminopropyl siloxane (5% N content), loadings ranging from .001 to 20 % by weight gives highly crystalline polyaniline. The highly crystalline polyaniline in turn exhibits increased modulus, stiffness, yield and tensile strengths, hardness, density and softening points. Thus, the siloxane at these loadings is having an antiplasticization effect. Above 20% loading, the crystallinity begins to decrease. As the crystallinity decreases, the modulus, stiffness, yield and tensile strengths, hardness, density and softening points begin to decrease. Thus, the siloxane at these loadings begins to have a plasticization effect. The siloxane content becomes high enough that it disrupts the polyaniline base interactions in the crystalline regions. With the poly co dimethyl aminopropyl siloxanes having .5 and 13% N ratios, similar trends are observed but the particular amount of siloxane needed to have a plasticization effect or an antiplasticization effect varies. Thus, the degree of crystallinity and the degree of amorphous regions and in turn the properties of polyaniline can be tuned by the nature of the additive as well as the amount of additive. Indeed, using the same additive but simply changing the loading dramatically changes the morphology and in turn the properties of polyaniline.

The electronic properties of the polymer are also impacted. The conductivity of a polyaniline base film cast from NMP and containing 1% by weight poly-co-dimethyl aminopropyl siloxane which is doped by aqueous hydrochloric acid is 50 S/cm as compared to 1 S/cm for a polyaniline film with no plasticizer. This is isotropic conductivity. The doped film containing the polysiloxane retains the highly crystalline structure.

The degree of crystallinity and the degree of amorphous regions and in turn the physical, mechanical, and electronic properties can be tuned by the particular additive used and by the amount of additive. For example, the Tg of polyaniline can be increased or decreased by the amount and type of additive. The mechanical properties such as tensile properties, modulus, impact resistance, etc. can be tuned as described above. The additive can range from .001 to 90% by weight, more preferably from .001 to 50% and most preferably from .001 to 25%. A list of plasticizers that can be used to practice the present invention is given in Table 1. The plasticizer can be small molecules, oligomeric or polymeric in nature as can be seen in Table 1. They can be monofuntional, bifunctional, and multifunctional. The additive can also be removed from the final film structure if so desired by appropriate extraction.

Specific Examples

POLYANILINE SYNTHESIS

Polyaniline is synthesized by the oxidative polymerization of aniline using ammonium peroxydisulfate in aqueous hydrochloric acid. The polyaniline hydrochloride precipitates from solution. The polymer is then neutralized using aquoeous ammonium hydroxide. The neutralized or non-doped polyaniline base is then filtered, washed and dried. Polyaniline can also be made by electrochemical oxidative polymerization as taught by W. Huang, B. Humphrey, and A.G. MacDiarmid, J. Chem. Soc., Faraday Trans. 1, 82, 2385, 1986.

POLYANILINE BASE IN NMP

The polyaniline base powder is readily dissolved in NMP up to 5% solids. Thin films (on the order of a micron) can be formed by spin-coating. Thick films are made by solution casting and drying ($70°C$ in vacuum oven under a nitrogen purge for 15 hours). These solutions and films have the properties described above.

POLYANILINE BASE IN NMP/PLASTICIZER

a. Polyaniline Base was first dissolved in NMP to 5% solids and allowed to mix well. A poly-co-dimethyl, aminopropyl siloxane (N content 5% relative to repeat unit) was dissolved to 5% in NMP. The siloxane solution was added to the polyaniline base solution. The resulting admixture was allowed to mix for 12 hours at room temperature. A number of solutions were made having from .001 % to 50% siloxane content (by weight relative to polyaniline). Thin films were spin-coated onto quartz substrates; Thick films were prepared by solution casting and baking the solutions at 70°C in a vacuum oven under a Nitrogen purge for 15 hours). The solutions and the films have the properties described above.

b. The same experiment described in(a)was carried out except that the plasticizer was a poly-co-dimethyl, aminopropyl siloxane in which the N content was 13%.

c. The same experiment described in (a) was carried out except that the plasticizer was a poly-co-dimethyl, aminopropyl siloxane in which the N content was .5%.

d. The same experiment described in (a) was carried out except that the plasticizer was polyglycol diacid.

e. The same experiment described in (a) was carried out except that the plasticizer was 3,6,9-trioxaundecanedioic acid.

f. The same experiment described in (a) was carried out except that the plasticizer was poly(ethylene glycol) tetrahydro furfuryl ether.

g. The same experiment described in (a) was carried out except that the plasticizer was epoxidized soy bean oil.

POLYANILINE BASE IN NMP/M-CRESOL/PLASTICIZER

The same experiment as described in (a) was carried out except that polyaniline base and the plasticizer was dissolved in MMP/m-Cresol mixtures in which m-Cresol ranged from 1 to 99%.

POLYANILINE BASE IN M-CRESOL/PLASTICIZER

The same experiment as described in (a) was carried out except that the polyaniline base was dissolved in m-Cresol and the plasticizer was dissolved in m-Cresol.

POLYANILINE BASE IN M-CRESOL AND IN NMP/M-CRESOL

Polyaniline Base was dissolved in m-Cresol and in NMP/m-Cresol combinations to 5% solids. The m-Cresol in the latter system being the additive ranged from 1 to 99%. Free-Standing films were made by solution casting techniques. With increasing m-cresol content, the polyaniline exhibited a WAXS similar to that shown in Figure 5a except that the amorphous scattering peak became somewhat sharper indicative of some crystallinity. However, this was significantly less than observed with the siloxane plasticizer.

DOPED POLYANILINES

1. Hydrochloric Acid and/or Methanesulfonic Acid Doped Films.

Polyaniline base films made as described above were doped by aqueous acid solutions of hydrochloric or methanesulfonic acid. The films were immersed in the acid solution for 12 hours for thin films and 36 hours for the thick films. The conductivity of a polyaniline base film processed from NMP and doped with these acid solutions is 1 S/cm. The conductivity of a base film processed from NMP and 1 % poly-co- dimethyl, aminopropyl siloxane (5%N content) was 50 S/cm.

2. Sulfonic Acid Doped Polyanilines.

Polyaniline Base was dissolved in a solvent such as NMP or NMP/m-Cresol combinations, etc. from 1 to 5% solids. To this solution was added a dopant such as camphorsulfonic acid or acrylamidopropanesulfonic acid (previously reported in U.S. Patent Application Serial No. 595,853 filed on February 2, 1996, see below). These solutions were used to spin-coat or solution cast films. In some experiments, the plasticizer such as the poly-co-dimethyl,aminopropyl siloxane in a solvent was added to the doped polyaniline solution. In certain other experiments, the plasticizer was first added to the polyaniline base solution. The dopant was then added to the polyaniline solution containing the plasticizer.

The teaching of the following U.S. Patent Applications:

"CROSS-LINKED ELECTRICALLY CONDUCTIVE POLYMERS, PRECURSORS THEREOF AND APPLICATIONS THEREOF", Application Serial No. 595,853, filed February 2, 1996; and "METHODS OF FABRICATION OF CROSS-LINKED ELECTRICALLY CONDUCTIVE POLYMERS AND PRECURSORS THEREOF", Application Serial No. 594,680, filed February 2, 1996; copies of which are available on the file of the present application, are on the file of the present application;

and "DEAGGREGATED ELECTRICALLY CONDUCTIVE POLYMERS AND PRECURSORS THEREOF", Application Serial No. 370,127, filed January 9, 1995 and "METHODS OF FABRICATION OD DEAGGREGATED ELECTRICALLY CONDUCTIVE POLYMERS AND PRECURSORS THEREOF", Application Serial No. 370,128, filed January 9, 1995 have been combined as EP application 95120081.5; also on file in the EPO.

## TABLE I    PLASTICIZERS

**ADIPIC ACID DERIVATIVES**
Dicapryl adipate
Di-(2-ethylhexyl) adipate
Di(n-heptyl, n-nonyl) adipate
Diisobutyl adipate
Diisodecyl adipate
Dinonyl adipate
Di-(tridecyl) adipate

**AZELAIC ACID DERIVATIVES**
Di-(2-ethylhexyl azelate)
Diisodecyl azelate
Diisoctyl azelate
Dimethyl azelate
Di-n-hexyl azelate

**BENZOIC ACID DERIVATIVES**
Diethylene glycol dibenzoate
Dipropylene glycol dibenzoate
Polyethylene glycol 200 dibenzoate

**CITRIC ACID DERIVATIVES**
Acetyl tri-n-butyl citrate
Acetyl triethyl citrate
Tri-n-butyl citrate
Triethyl citrate

**DIMER ACID DERIVATIVES**
Bis (2 hydroxyethyl dimetate)

**EPOXY DERIVATIVES**
Epoxidized linseed oil
Epoxidized soy bean oil
2-Ethylhexyl epoxytallate
n-Octyl epoxystereate

**FUMARIC ACID DERIVATIVES**
Dibutyl fumarate

**GLYCEROL DERIVATIVES**
Glycerol triacetate

**ISOBUTYRATE DERIVATIVE**
2,2,4-Trimethyl-1,3-pentanediol
Diisobutyrate

**ISOPHTHALIC ACID DERIVATIVES**
Di-(2-ethylhexyl) isophthalate
Dimethyl isophthalate
Diphenyl isophthalate

**LAURIC ACID DERIVATIVES**
Methyl laurate

**LINOLEIC ACID DERIVATIVE**
Methyl linoleate 75%

**MALEIC ACID DERIVATIVES**
Di-(2-ethylhexyl) maleate
Di-n-butyl maleate

**MELLITATES**
Tricapryl trimellitate
Tri-(2-ethylhexyl) trimellitate
Triisodecyl trimellitate
Tri-(n-octyl n-decyl) trimellitate

**MYRISTIC ACID DERIVATIVES**
Isopropyl myristate

**OLEIC ACID DERIVATIVES**
Butyl oleate
Glycerol monooleate
Glycerol trioleate
Methyl oleate
n-Propyl oleate
Tetrahydrofurfuryl oleate

**PALMITIC ACID DERIVATIVES**
Isopropyl palmitate
Methyl palmitate

**PARAFFIN DERIVATIVES**
Chloroparaffin 41°o Cl
Chloroparaffin 50°o Cl
Chloroparaffin 60°o Cl
Chloroparaffin 70°o Cl

**PHOSPHORIC ACID DERIVATIVES**
2-Ethylhexyl diphenyl phosphate
Isodecyl diphenyl phosphate
t-Butylphenyl diphenyl phosphate
tri-butoxyethyl phosphate
tributyl phosphate
tricresyl phosphate
triphenyl phosphate

**PHTHALIC ACID DERIVATIVES**
Butyl benzyl phthalate
Butyl octyl phthalate
Dicapryl phthalate
Dicyclohexyl phthalate
Di-(2-ethylhexyl) phthalate
Diethyl phthalate
Dihexyl phthalate
Diisobutyl phthalate
Diisodecyl phthalate
Diisononyl phthalate
Diisooctyl phthalate
Dimethyl phthalate
Ditridecyl phthalate
Diundecyl phthalate

**RICINOLEIC ACID DERIVATIVES**
Butyl ricinoleate
Glyceryl tri(acetyl) ricinoleate)
Methyl acetyl ricinoleate
Methyl ricinoleate
n-Butyl acetyl ricinoleate
Propylene glycol ricinoleate

**SEBACIC ACID DERIVATIVES**
Dibutyl sebacate
Di-(2-ethylhexyl) sebacate
Dimethyl sebacate

**STEARIC ACID DERIVATIVES**
Ethylene glycol monostearate
Glycerol monostearate
Isopropyl isostearate
Methyl stearate
n-Butyl stearate
Propylene glycol monostearate

**SUCCINIC ACID DERIVATIVES**
Diethyl succinate

Polyesters
adipic acid polyester
Paraplex G-40
adipic acid polyester
Santicizer 334F
azelaic acid polyester
Plastolein 9720
azelaic acid polyester
Plastolein 9750
sebacic acid polyester
Paraplex G-25

Sucrose derivatives
sucrose acetate-isobutyrate (SAIB)

Tartaric acid derivative
dibutyl tartrate

Terephthalic acid derivative
bis(2-ethylhexyl) terephthalate
(DOTP)

Trimellitic acid derivatives
tris(2-ethylhexyl) trimellitate
(TOTM)
heptyl nonyl trimellitate
heptyl nonyl undecyl trimellitate
triisodecyl trimellitate

Glycolates
methyl phthalyl ethyl glycolate
butyl phthalyl butyl glycolate

Terpenes and Derivatives
Camphor
Hydrogenated methyl ester or rosin

Phosphonic Acid Derivatives
Chlorinated Polyphosphanate

Siloxanes
Polydimethyl siloxane
Poly-co-dimethyl/propylamine
siloxanes with various amount of
propylamine content

Polydiphenylsiloxanes
Poly-co-dimethylphenyl siloxanes
Silanol terminated polysiloxanes
Amino terminated polysiloxanes
Epoxy terminated polysiloxanes
Carbirol terminated polysiloxanes
Polysilanes

$$\left( \begin{array}{cc} CH_3 & CH_3 \\ | & | \\ -Si-O-Si-O- \\ | & | \\ CH_3 & CH_2\ CH_2\ CH_2\ NH_2 \end{array} \right)_x$$

## Claims

1. A structure comprising:

a polycrystalline material comprising crystallites of polymers with intersticial regions therebetween;
said polymers being selected from the group consisting of a precursor to an electrically conductive polymer and an electrically conductive polymer;
said intersticial regions between said crystallites comprising amorphous material including an additive;

wherein said additive is a plasticizer selected from the group consisting of:

Adipic acid derivatives; Sebacic acid derivatives; Azelaic acid derivatives; Stearic acid derivatives; Benzoic acid derivatives; Succinic acid derivatives; Citric acid derivatives; Dimer acid derivatives; Terpentines; Epoxy derivatives; Terpentine derivatives; Fumaric acid derivatives; Siloxanes; Polysiloxanes; Isobutyrate derivatives; Isophthalic acid derivatives; Lauric acid derivatives; Polyesters; Linoleic acid derivatives; Sucrose derivatives; Maleic acid derivatives; Tartaric acid derivatives; Mellitates; Terephthalic acid derivatives; Myristic acid derivatives; Trimellitic acid derivatives; Oleic acid derivates; Palmitic acid derivatives; Glycolates; Paraffin derivatives; Phosphoric acid derivatives; Phosphonic acid derivatives; Phthalic acid derivatives; Polysilanes; and Ricinoleic acid derivatives.

2. A structure according to claim 1, wherein said structure is electrically conductive and has an isotropic electrical conductivity.

3. A structure according to any preceding claim, wherein said polymer is selected from the group consisting of substituted and unsubstituted polyparaphenylene vinylenes, polyparaphenylenes, polyanilines, polythiophenes, polyazines, polyfuranes, polypyrroles, polyselenophenes, poly-p-phenylene sulfides, polyacetylenes formed from soluble precursors, combinations thereof and blends thereof with other polymers and copolymers of the monomers thereof.

4. A structure according to any preceding claim, wherein said structure has crystallinity greater than 25%.

5. A structure according to any preceding claim, wherein said crystallites have a size greater than 80 Angstroms.

6. A structure according to any preceding claim, wherein the amorphous material in the intersticial regions contains crosslinks.

7. A structure according to any preceding claim, wherein said polycrystalline material comprises crystallites of polyaniline with intersticial regions therebetween and said intersticial regions comprise amorphous polyaniline.

8. A structure according to any preceding claim, wherein said amorphous material includes an additive in an amount from 0.001% to 90% by weight selected from the group consisting of poly-co-dimethylaminopropyl siloxane, poly (ethylene glycol) tetrahydro furfuryl ether, and epoxidized soy bean oil.

9. A structure according to any preceding claim, wherein said structure is stretch oriented.

10. A structure according to any preceding claim, wherein said additive is selected from the group consisting of monomer, oligomeric and polymeric plasticizers.

11. A structure according to any preceding claim, wherein said structure is thermally annealed.

12. A structure according to any preceding claim, wherein said additive provides mobility to said polymer to allow said polymers to associate with one another to achieve said crystallites.

13. A method of making a structure according to any preceding claim comprising:

forming an admixture of a solvent, an additive and a polymer selected from the group consisting of a precursor to an electrically conductive polymer and an electrically conductive polymer; and
removing or partly removing said solvent;

wherein said additive is a plasticizer selected from the group consisting of:

Adipic acid derivatives; Sebacic acid derivatives; Azelaic acid derivatives; Stearic acid derivatives; Benzoic acid derivatives; Succinic acid derivatives; Citric acid derivatives; Dimer acid derivatives; Terpentines; Epoxy derivatives; Terpentine derivatives; Fumaric acid derivatives; Siloxanes; Polysiloxanes; Isobutyrate derivatives; Isophthalic acid derivatives; Lauric acid derivatives; Polyesters; Linoleic acid derivatives; Sucrose derivatives; Maleic acid derivatives; Tartaric acid derivatives; Mellitates; Terephthalic acid derivatives; Myristic acid derivatives; Trimellitic acid derivatives; Oleic acid derivatives; Palmitic acid derivatives; Glycolates; Paraffin derivatives; Phosphoric acid derivatives; Phosphonic acid derivatives; Phthalic acid derivatives; Polysilanes; and Ricinoleic acid derivatives.

14. A method according to claim 13, wherein said admixture is electrically conductive and has an isotropic electrical conductivity.

**15.** A method according to claim 13 or 14, wherein said solvent when removed or partly removed forms a film which is further stretch oriented.

**16.** A method according to any of claims 13 to 15, comprising:

forming an admixture of polyaniline base, N-methyl pyrrolidinone and said plasticizer;
said plasticizer content being from 0.001% to 90% by weight of said admixture;
said plasticizer being selected from the group consisting of poly-co-dimethyl aminopropyl siloxane, polyglycol diacid, 3,6,9-trioxaundecaedioic acid and poly (ethylene glycol) tetrahydro furfuryo ether, and epoxidized soy bean oil.

**17.** A method according to any of claims 13 to 16, wherein said solvent is extracted from said admixture by a technique selected from the group consisting of solvent extraction and evaporation.

**18.** A method according to any of claims 13 to 17, wherein said additive is first added to a solvent and thereafter an electrically conducting polyaniline is added which becomes neutralized upon addition to said admixture.

**19.** A method according to any of claims 13 to 18, wherein said admixture contains a polyaniline monomer, said additive and an oxidant.

**20.** A method according to any of claims 13 to 19, wherein said additive contains substituents which facilitate the miscibility of said polymer and said additive.

**21.** A method according to any of claims 13 to 20 further including adding a dopant.


**Patentansprüche**

**1.** Struktur mit:

einem polykristallinen Material, das Kristallite aus Polymeren mit Zwischengitterbereichen dazwischen beinhaltet;

wobei die Polymere aus der Gruppe ausgewählt sind, die aus einem Vorläufer eines elektrisch leitfähigen Polymers und einem elektrisch leitfähigen Polymer besteht;
wobei die Zwischengitterbereiche zwischen den Kristalliten amorphes Material beinhalten, das ein Additiv enthält;
wobei das Additiv ein Weichmacher ist, der aus der Gruppe ausgewählt ist, die besteht aus:

Derivate von Adipinsäure; Derivate von Sebacinsäure, Derivate von Azelainsäure; Derivate von Stearinsäure; Derivate von Benzoesäure; Derivate von Succinsäure; Derivate von Zitronensäure; Derivate von Dimersäure; Terpentine; Epoxidderivate; Terpentinderivate; Derivate von Fumarsäure; Siloxane; Polysiloxane; Isobutyratderivate; Derivate von Isophthalsäure; Derivate von Laurinsäure; Polyester; Derivate von Linolsäure; Derivate von Saccharose; Derivate von Maleinsäure; Derivate von Weinsäure; Mellitate; Derivate von Terephthalsäure; Derivate von Myristinsäure; Derivate von Trimellithsäure; Derivate von Oleinsäure; Derivate von Palmitinsäure; Glycolate; Paraffinderivate; Derivate von Phosphorsäure; Derivate von Phosphonsäure; Derivate von Phthalsäure; Polysilane; und Derivate von Ricinusölsäure.

**2.** Struktur nach Anspruch 1, wobei die Struktur elektrisch leitfähig ist und eine isotrope elektrische Leitfähigkeit aufweist.

**3.** Struktur nach irgendeinem vorhergehenden Anspruch, wobei das Polymer aus der Gruppe ausgewählt ist, die besteht aus substituierten und nicht substituierten Polyparaphenylenvinylenen, Polyparaphenylenen, Polyanilinen, Polythiophenen, Polyazinen, Polyfuranen, Polypyrrolen, Polyselenophenen, Poly-p-phenylensulfiden, Polyacetylenen, die aus löslichen Vorläufern, Kombinationen derselben und Gemischen derselben mit anderen Polymeren und Copolymeren der Monomere derselben gebildet sind.

**4.** Struktur nach irgendeinem vorhergehenden Anspruch, wobei die Struktur eine Kristallinität von mehr als 25 % aufweist.

5. Struktur nach irgendeinem vorhergehenden Anspruch, wobei die Kristallite eine Abmessung von mehr als 80 Ångström aufweisen.

6. Struktur nach irgendeinem vorhergehenden Anspruch, wobei das amorphe Material in den Zwischengitterbereichen Vernetzungen aufweist.

7. Struktur nach irgendeinem vorhergehenden Anspruch, wobei das polykristalline Material Kristallite aus Polyanilin mit Zwischengitterbereichen dazwischen beinhaltet und die Zwischengitterbereiche amorphes Polyanilin beinhalten.

8. Struktur nach irgendeinem vorhergehenden Anspruch, wobei das amorphe Material ein Additiv in einer Menge von 0,001 Gewichtsprozent bis 90 Gewichtsprozent beinhaltet, das aus der Gruppe ausgewählt ist, die aus Poly-co-dimethylaminopropylsiloxan, Poly(ethylenglycol)tetrahydrofurfurylether und epoxidiertem Sojabohnenöl besteht.

9. Struktur nach irgendeinem vorhergehenden Anspruch, wobei die Struktur streckorientiert ist.

10. Struktur nach irgendeinem vorhergehenden Anspruch, wobei das Additiv aus der Gruppe ausgewählt ist, die aus monomeren, oligomeren und polymeren Weichmachern besteht.

11. Struktur nach irgendeinem vorhergehenden Anspruch, wobei die Struktur thermisch ausgeheilt ist.

12. Struktur nach irgendeinem vorhergehenden Anspruch, wobei das Additiv dem Polymer Beweglichkeit verleiht, um zu ermöglichen, dass sich die Polymere miteinander verknüpfen, um die Kristallite zu erzielen.

13. Verfahren zur Herstellung einer Struktur nach irgendeinem vorhergehenden Anspruch, das umfasst:

Erzeugen eines Gemisches aus einem Lösungsmittel, einem Additiv und einem Polymer, das aus der Gruppe ausgewählt ist, die aus einem Vorläufer eines elektrisch leitfähigen Polymers und einem elektrisch leitfähigen Polymer besteht; und

Entfernen oder teilweises Entfernen des Lösungsmittels;

wobei das Additiv ein Weichmacher ist, das aus der Gruppe ausgewählt ist, die besteht aus:

Derivate von Adipinsäure; Derivate von Sebacinsäure, Derivate von Azelainsäure; Derivate von Stearinsäure; Derivate von Benzoesäure; Derivate von Succinsäure; Derivate von Zitronensäure; Derivate von Dimersäure; Terpentine; Epoxidderivate; Terpentinderivate; Derivate von Fumarsäure; Siloxane; Polysiloxane; Isobutyratderivate; Derivate von Isophthalsäure; Derivate von Laurinsäure; Polyester; Derivate von Linolsäure; Derivate von Saccharose; Derivate von Maleinsäure; Derivate von Weinsäure; Mellitate; Derivate von Terephthalsäure; Derivate von Myristinsäure; Derivate von Trimellithsäure; Derivate von Oleinsäure; Derivate von Palmitinsäure; Glycolate; Paraffinderivate; Derivate von Phosphorsäure; Derivate von Phosphonsäure; Derivate von Phthalsäure; Polysilane; und Derivate von Ricinusölsäure.

14. Verfahren nach Anspruch 13, wobei das Gemisch elektrisch leitfähig ist und eine isotrope elektrische Leitfähigkeit aufweist.

15. Verfahren nach Anspruch 13 oder 14, wobei das Lösungsmittel, wenn es entfernt oder teilweise entfernt wird, einen Film bildet, der des Weiteren streckorientiert ist.

16. Verfahren nach irgendeinem der Ansprüche 13 bis 15, das umfasst:

Erzeugen eines Gemisches aus einer Polyanilinbase, N-Methylpyrrolidinon und dem Weichmacher;

wobei der Gehalt an Weichmacher zwischen 0,001 Gewichtsprozent und 90 Gewichtsprozent des Gemisches beträgt;
wobei der Weichmacher aus der Gruppe ausgewählt ist, die aus Poly-co-dimethylaminopropylsiloxan, einer zweiwertigen Polyglycolsäure, 3,6,9-Trioxaundecaedioesäure und Poly(ethylenglycol)tetrahydrofurfurylether sowie epoxidiertem Sojabohnenöl besteht.

**17.** Verfahren nach irgendeinem der Ansprüche 13 bis 16, wobei das Lösungsmittel durch eine Technik aus dem Gemisch extrahiert wird, die aus der Gruppe ausgewählt ist, die aus Lösungsmittelextraktion und -verdampfung besteht.

**18.** Verfahren nach irgendeinem der Ansprüche 13 bis 17, wobei das Additiv zuerst zu einem Lösungsmittel zugegeben wird und danach ein elektrisch leitendes Polyanilin zugegeben wird, das bei Zugabe zu dem Gemisch neutralisiert wird.

**19.** Verfahren nach irgendeinem der Ansprüche 13 bis 18, wobei das Gemisch ein Polyanilinmonomer, das Additiv und ein Oxidationsmittel enthält.

**20.** Verfahren nach irgendeinem der Ansprüche 13 bis 19, wobei das Additiv Substituenten enthält, welche die Mischbarkeit des Polymers und des Additivs erleichtern.

**21.** Verfahren nach irgendeinem der Ansprüche 13 bis 20, das des Weiteren die Zugabe eines Dotierstoffes beinhaltet.

**Revendications**

**1.** Structure comprenant :

un matériau polycristallin comprenant des cristallites de polymères comprenant des régions interstitielles entre celles-ci,

lesdits polymères étant choisis parmi le groupe constitué d'un précurseur de polymère électroconducteur et d'un polymère électroconducteur,

lesdites régions interstitielles entre lesdites cristallites comprenant un matériau amorphe incluant un additif,

dans laquelle ledit additif est un plastifiant choisi parmi le groupe constitué de :

des dérivés de l'acide adipique, des dérivés de l'acide sébacique, des dérivés de l'acide azélaïque, des dérivés de l'acide stéarique, des dérivés de l'acide benzoïque, des dérivés de l'acide succinique, des dérivés de l'acide citrique, des dérivés d'acides de dimères, des térébenthines, des dérivés époxy, des dérivés de la térébenthine, des dérivés de l'acide fumarique, des siloxanes, des polysiloxanes, des dérivés d'isobutyrate, des dérivés de l'acide isophtalique, des dérivés de l'acide laurique, des polyesters, des dérivés de l'acide linoléique, des dérivés du sucrose, des dérivés de l'acide maléique, des dérivés de l'acide tartrique, des mellitates, des dérivés de l'acide téréphtalique, des dérivés de l'acide myristique, des dérivés de l'acide trimellitique, des dérivés de l'acide oléique, des dérivés de l'acide palmitique, des glycolates, des dérivés paraffiniques, des dérivés de l'acide phosphorique, des dérivés de l'acide phosphonique, des dérivés de l'acide phtalique, des polysilanes, et des dérivés de l'acide ricinoléique.

**2.** Structure selon la revendication 1, dans laquelle ladite structure est électroconductrice et présente une conductivité électrique isotrope.

**3.** Structure selon l'une quelconque des revendications précédentes, dans laquelle ledit polymère est choisi parmi le groupe constitué de polyparaphénylènevynilènes substitués et non substitués, de polyparaphénylènes, de polyanilines, de polythiophènes, de polyazines, de polyfuranes, de polypyrroles, de polysélénophènes, de polysulfures de p-phénylène, de polyacétylènes formés à partir de précurseurs solubles, de combinaisons de ceux-ci et de mélanges de ceux-ci avec d'autres polymères et copolymères des monomères de ceux-ci.

**4.** Structure selon l'une quelconque des revendications précédentes, dans laquelle ladite structure présente une cristallinité supérieure à 25 %.

**5.** Structure selon l'une quelconque des revendications précédentes, dans laquelle lesdites cristallites présentent une taille supérieure à 80 angströms.

**6.** Structure selon l'une quelconque des revendications précédentes, dans laquelle le matériau amorphe dans les régions interstitielles contient des réticulations.

**7.** Structure selon l'une quelconque des revendications précédentes, dans laquelle ledit matériau polycristallin comprend des crystallites de polyaniline avec des régions interstitielles entre celles-ci et lesdites régions interstitielles comprennent de la polyaniline amorphe.

**8.** Structure selon l'une quelconque des revendications précédentes, dans laquelle ledit matériau amorphe comprend un additif dans une proportion de 0,001 % à 90 % en poids, choisi parmi le groupe constitué de poly-co-diméthylaminopropylsiloxane, de poly (éthylène glycol) tétrahydrofurfuryléther, et d'huile de soja époxydée.

**9.** Structure selon l'une quelconque des revendications précédentes, dans laquelle ladite structure est orientée par étirement.

**10.** Structure selon l'une quelconque des revendications précédentes, dans laquelle ledit additif est choisi parmi le groupe constitué de plastifiants monomères, oligomères et polymères.

**11.** Structure selon l'une quelconque des revendications précédentes, dans laquelle ladite structure est thermiquement recuite.

**12.** Structure selon l'une quelconque des revendications précédentes, dans laquelle ledit additif procure une mobilité audit polymère afin de permettre auxdits polymères de s'associer les uns avec les autres afin d'obtenir lesdites cristallites.

**13.** Procédé de réalisation d'une structure selon l'une quelconque des revendications précédentes comprenant :

la formation d'une admixtion d'un solvant, d'un additif et d'un polymère choisis parmi le groupe constitué d'un précurseur de polymère électroconducteur et d'un polymère électroconducteur, et

l'élimination ou l'élimination partielle dudit solvant,

dans lequel ledit additif est un plastifiant choisi parmi le groupe constitué de :

des dérivés de l'acide adipique, des dérivés de l'acide sébacique, des dérivés de l'acide azélaïque, des dérivés de l'acide stéarique, des dérivés de l'acide benzoïque, des dérivés de l'acide succinique, des dérivés de l'acide citrique, des dérivés d'acides de dimères, des térébenthines, des dérivés époxy, des dérivés de la térébenthine, des dérivés de l'acide fumarique, des siloxanes, des polysiloxanes, des dérivés d'isobutyrate, des dérivés de l'acide isophtalique, des dérivés de l'acide laurique, des polyesters, des dérivés de l'acide linoléique, des dérivés du sucrose, des dérivés de l'acide maléique, des dérivés de l'acide tartrique, des mellitates, des dérivés de l'acide téréphtalique, des dérivés de l'acide myristique, des dérivés de l'acide trimellitique, des dérivés de l'acide oléique, des dérivés de l'acide palmitique, des glycolates, des dérivés paraffiniques, des dérivés de l'acide phosphorique, des dérivés de l'acide phosphonique, des dérivés de l'acide phtalique, des polysilanes, et des dérivés de l'acide ricinoléique.

**14.** Procédé selon la revendication 13, dans lequel ladite admixtion est électroconductrice et présente une conductivité électrique isotrope.

**15.** Procédé selon la revendication 13 ou 14, dans lequel ledit solvant, lorsqu'il est éliminé ou partiellement éliminé, forme un film qui est en outre orienté par étirement.

**16.** Procédé selon l'une quelconque des revendications 13 à 15, comprenant:

la formation d'une admixtion d'une base de polyaniline, de N-méthylpyrrolidone et dudit plastifiant,

ladite teneur en plastifiant étant de 0,001 % à 90 % en poids de ladite admixtion,

ledit plastifiant étant choisi parmi le groupe constitué de poly-co-diméthyiaminopropylsiloxane, de diacide de polyglycol, d'acide 3, 6, 9-trioxa-undécanedioic et de poly(éthylèneglycol) tétrahydrofurfuryléther, et d'huile de soja époxydée.

**17.** Procédé selon l'une quelconque des revendications 13 à 16, dans lequel ledit solvant est extrait de ladite admixtion par une technique choisie parmi le groupe constitué d'une extraction par solvant et d'une évaporation.

**18.** Procédé selon l'une quelconque des revendications 13 à 17, dans lequel ledit additif est tout d'abord ajouté à un solvant et ensuite une polyaniline électroconductrice est ajoutée, laquelle est neutralisée lors de l'addition à ladite admixtion.

**19.** Procédé selon l'une quelconque des revendications 13 à 18, dans lequel ladite admixtion contient un monomère de polyaniline, ledit additif et un oxydant.

**20.** Procédé selon l'une quelconque des revendications 13 à 19, dans lequel ledit additif contient des substituants qui facilitent la miscibilité dudit polymère et dudit additif.

**21.** Procédé selon l'une quelconque des revendications 13 à 20, comprenant en outre l'addition d'un dopant.

# FIG.1

# FIG.2

# FIG.3

FIG. 4

PEAK RETENTION TIME (MINUTES)

DETECTOR RESPONSE

FIG. 5

FIG. 6

FIG. 7

EP 0 797 218 B1

FIG. 8

EP 0 797 218 B1

FIG. 9

EP 0 797 218 B1

FIG. 10

EP 0 797 218 B1

DETECTOR
RESPONSE

PEAK RETENTION TIME
(MINUTES)

FIG. 11

EP 0 797 218 B1